# NEUE EUROPÄISCHE PATENTSCHRIFT

(11) **EP 1 912 047 B2**
(45) Veröffentlichungstag und Bekanntmachung des Hinweises auf die Entscheidung über den Einspruch: **25.09.2019**
(45) Hinweis auf die Patenterteilung: 30.03.2011
(21) Anmeldenummer: 06122083.6
(22) Anmeldetag: 11.10.2006
(51) Int. Cl.: G01G 21/28

(54) **Elektronische Waage**
Electronic scale
Balance électronique

(43) Veröffentlichungstag der Anmeldung: 16.04.2008
(73) Patentinhaber: Mettler-Toledo GmbH, 8606 Greifensee (CH)
(72) Erfinder: Nufer, Bruno, 8308, Illnau (CH); Zeiss, Siegfried, 8633, Wolfhausen (CH)
(74) Vertreter: Mettler-Toledo

(56) Entgegenhaltungen:
- EP-A1- 1 195 584
- EP-B1- 1 195 586
- DE-A1- 10 032 398
- DE-C1- 3 601 408

## Beschreibung

Die Erfindung bezieht sich auf eine automatisierte Beschickung eines Lastträgers einer elektronische Waage mit einem Windschutz.

Ein Windschutz ist insbesondere bei Waagen, welche für die Wägung von kleinsten Lasten beispielsweise im Mikro- oder sogar Submikrogrammbereich ausgelegt sind, ein wichtiges Element, da in diesen Lastbereichen kleinste Änderungen, beispielsweise in der Luftbewegung, des Auftriebs, Temperaturschwankungen und/oder Erschütterungen, einen signifikanten Einfluss auf das Wägeergebnis haben können. Zur Minimierung dieser Einflüsse ist es in der Regel notwendig, dass nach einer Beschickung der Waage die eigentliche Wägung mit einer gewissen Zeitverzögerung durchgeführt wird, damit sich vor allem die im Wägeraum eingeschlossene Luft wieder beruhigen kann und auch alle weiteren äusseren Parameter möglichst konstant sind. Dadurch wird die Messgenauigkeit verbessert, jedoch gleichzeitig die Messdauer erheblich verlängert, was insbesondere bei Mehrfachmessungen oder bei Kontrollmessungen gleichartiger Lasten oder Wägegüter zu unverhältnismässig langen Messdauern führen kann.

Weiterhin sollte bei der Beschickung einer Waage darauf geachtet werden, dass eine zusätzliche Druck- oder Kraftbeaufschlagung des Lastträgers vermieden wird, da der Lastträger mit der Wägemechanik verbunden ist und diese durch eine zu starke und/oder unkontrollierte Krafteinwirkung beschädigt oder sogar zerstört werden könnte. Beispielsweise kann die manuelle Beschickung einer hochpräzisen Waage mittels einer Pinzette die Wiederholbarkeit einer Messung beeinflussen, da bei jedem Auflegen unterschiedlich starke mechanische Kräfte ausgeübt bzw. erzeugt werden.

Bekannte elektronische Waagen, beispielsweise Laborwaagen, Analysenwaagen oder Mikrowaagen, sind je nach Anwendungsbereich mit unterschiedlichen Windschutz-Varianten ausgestattet, wobei sowohl im Wesentlichen eckige als auch runde Varianten bekannt sind, welche in der Regel mindestens eine, meist verschliessbare, Beschickungsöffnung aufweisen.

Hochpräzise Waage, so genannte Mikrowaagen, können unter anderem für die Kontrollwägung kleiner rohr- oder stangenförmiger Wägegüter eingesetzt werden, wie beispielsweise Stents für die Gefässchirurgie. Bei derartigen Anwendungen sollen möglichst viele gleichartige Güter nacheinander in möglichst kurzer Zeit gewogen werden. Weitere Anwendungen können zum Beispiel auch Kontrollmessungen bestimmter Güter oder die Verfolgung von Gewichtsschwankungen eines oder mehrerer Wägegüter über eine bestimmte Zeitdauer umfassen, beispielsweise in der Qualitätssicherung.

Hochpräzise Waagen werden inzwischen nicht mehr nur im Labor, sondern immer mehr auch bei der Serien-Produktion kleinster Gegenstände, wie Stents, Filter, Implantate, Computer Chips und ähnlichem eingesetzt. Insbesondere in der Produktion wird an eine Waage einerseits der Anspruch gestellt, dass sie die geforderten Messgenauigkeiten gewährleistet, sowie schnell reproduzierbare Ergebnisse liefert, andererseits sollte eine Waage robust und einfach zu bedienen sein.

Zur Steigerung der Benutzerfreundlichkeit einer Waage, zum zusätzlichen Schutz der Wägemechanik bei der Beschickung, sowie zur Verkürzung der Messzeiten und zur Verbesserung der Reproduzierbarkeit bzw. der Wiederholbarkeit einer Messung, insbesondere bei der Messung einer Vielzahl gleichartiger Wägegüter oder bei Mehrfachbestimmungen, kann eine elektronische Waage, insbesondere eine Mikrowaage, mit einem Windschutz versehen werden, welcher einen an die Dimensionen des zu wägenden Wägeguts angepassten Wägeraum umschliesst und mindestens ein Verschlusselement zum Öffnen und/oder Verschliessen mindestens einer Beschickungsöffnung aufweist. Weiterhin weist eine Waage einen Lastträger, eine mit dem Lastträger zusammenwirkende Transfereinrichtung und einen Antrieb zur Betätigung des Verschlusselements auf. Der Antrieb weist ferner ein Stellglied auf und bewirkt zusammen mit dem Stellglied und einem Übertragungselement, welches vorzugsweise an der Transfereinrichtung angeordnet ist, eine Hubbewegung der Transfereinrichtung relativ zum Lastträger. Das Stellglied ist für das Positionieren der Transfereinrichtung und/oder des Lastträgers in mehreren definierten Positionen ausgebildet.

Die Dimension des Wägeraums und damit des Windschutzes wird an das zu bestimmende Wägegut derart angepasst, dass das Gesamtvolumen des Wägeraums nur geringfügig grösser ist, als das des Wägeguts. Die Form des Wägeraums kann in Abhängigkeit des Wägeguts sowohl im Wesentlichen vieleckig, vorzugsweise rechteckig, oder auch im Wesentlichen rund oder oval sein. Dadurch wird automatisch auch das im Wägeraum befindliche Luftvolumen reduziert, wodurch sich die Zeit bis zur Einstellung konstanter äusserer Parameter, zu denen unter anderen der Luftdruck, die Luftbewegung und die Luftfeuchtigkeit zählen, reduzieren lässt. Eine Anpassung des Wägeraums an die Dimensionen eines zu bestimmenden Wägeguts ist insbesondere für die Verbesserung der Reproduzierbarkeit und die Verkürzung der Messzeiten bei Mehrfachwägungen oder bei der Wägung einer Vielzahl gleichartiger Wägegüter vorteilhaft.

Zum Schutz der Wägemechanik sowie zur Gewährleistung eines geführten Auflegens eines Wägeguts auf den Lastträger und/oder eines geführten Abhebens des Wägeguts von dem Lastträger weist die Waage eine Transfereinrichtung auf, welche zwar relativ zum Lastträger bewegbar ist und ein Wägegut mit diesem austauschen kann, aber in keinem direkten Kraftkontakt mit dem Lastträger steht.

Die relative Bewegung der Transfereinrichtung zum Lastträger sowie das kontrollierte Öffnen und/oder Verschliessen der Beschickungsöffnung wird durch den Antrieb ausgelöst, wobei die Bewegung der Transfereinrichtung und das Öffnen und/oder Schliessen des Verschlusselements miteinander gekoppelt sind.

Die Beschickungsöffnung kann mit einem geeigneten Verschlusselement versehen werden, welches geöffnet und/oder geschlossen werden kann. Das Verschlusselement kann zum Beispiel um ein Achse oder eine Drehpunkt schwenkbar oder gleitverschieblich gelagert sein. Gerade eine gleitverschiebliche oder um einen Drehpunkt schwenkbare Lagerung ist vorteilhaft, da so Windstösse, wie sie beispielsweise beim Schliessen einer Klappe entstehen und welche das Wägegut beeinflussen können, weitestgehend vermieden werden. Die Bewegung des Verschlusselements ist mit der Bewegung der Transfereinrichtung in Relation zum Lastträger gekoppelt, damit der Wägeraum nur während des Einbringens des Wägeguts geöffnet ist.

Aufgrund der Ausgestaltung des Stellglieds kann die Transfereinrichtung in Relation zum Lastträger in verschiedenen, definierten Positionen, insbesondere in drei Positionen, positioniert werden. Mögliche Ausgestaltungen des Stellglieds umfassen dabei sowohl verschiedenartige Kurvenscheiben, Exzenter als auch einen linear verschieblichen Schieber.

In Abhängigkeit der Ausgestaltung des Stellglieds dient das Übertragungselement dazu, die Bewegung des Stellglieds in eine Hubbewegung der Transfereinrichtung in Relation zum Lastträger umzusetzen. Vorzugsweise ist das Übertragungselement mit der Transfereinrichtung verbunden oder an dieser angeordnet.

Während einer Messung und auch während der Beschickung des Lastträgers sollte der Wägeraum, insbesondere die Beschickungsöffnung geschlossen sein, wobei im Wägeraum während einer Messung neben dem zu bestimmenden Wägegut zumindest ein Teil der Transfereinrichtung sowie auch ein Teil des Lastträgers angeordnet sind.

Der Lastträger weist eine erste Aufnahme und die Transfereinrichtung eine zweite Aufnahme auf. Die Aufnahmen sind so ausgestaltet, dass bei einer Bewegung des Lastträgers in Relation zur Transfereinrichtung ein berührungsloses ineinander greifen bzw. durch einander hindurch greifen der beiden Aufnahmen zum Transfer einer zu wägenden Last ermöglicht wird.

Die Aufnahmen weisen gabel- oder zinkenartige Vorsprünge auf, welche so angeordnet sind, dass die erste und zweite Aufnahme aneinander vorbei bzw. durch einander hindurch bewegt werden können. Sobald ein Wägegut auf einer der Aufnahmen platziert wird, kann diese durch das aneinander vorbei bewegen bzw. das durch einander hindurch greifen der Aufnahmen von einer Aufnahme zur anderen transferiert werden. Weitere Ausgestaltungen der Aufnahmen können unter anderen plattenartige Strukturen mit nadel- oder stiftartigen Auflageelemente umfassen und/oder auch an bereits bekannte Aufnahmevarianten angelehnt sein.

Ein automatisiertes Auflegen und/oder Abheben eines Wägeguts vom Lastträger sowie ein auf ein spezifisches Wägegut angepasster Wägeraum ist insbesondere für die Wägung von Gütern im Mikro- oder Submikrogrammbereich von Vorteil, so dass es sich anbietet, eine so genannte Mikrowaage derart auszugestalten.

Bekannte Mikrowaagen, beispielsweise die UMX2 von Mettler-Toledo, sind teilweise mit einem auswechselbaren Windschutz ausgestattet, so dass es vorteilhaft ist einen erfindungsgemässen Windschutz zu schaffen, welcher einfach mit einer bekannten Waage kombinierbar ist und möglichst sogar einen Standardwindschutz ersetzen kann, da so dem Benutzer eine hohe Flexibilität beim Einsatz der Waage ermöglicht wird.

Die vorzugsweise automatisierte Beschickung eines Lastträger einer elektronischen Waage mit einem Windschutz, der einen an ein Wägegut angepassten Wägeraum umschliesst und mindestens eine mit einem Verschlusselement verschliessbare Beschickungsöffnung aufweist, mit einem Antrieb, welcher das Verschlusselement betätigt und ferner ein Stellglied aufweist, und mit einer Transfereinrichtung, welche sowohl mit dem Lastträger als auch über ein Übertragungselement mit dem Stellglied zusammenwirkt, kann mehrere Schritte umfassen.

Zunächst wird die Beschickungsöffnung durch Betätigung des Verschlusselements geöffnet und gleichzeitig eine ersten Position zwischen dem Lastträger und der Transfereinrichtung durch eine relative Bewegung derselben zueinander eingestellt Das zu bestimmende Wägegut kann in der ersten Position auf der Transfereinrichtung, genauer auf der damit verbundenen Aufnahme, angeordnet werden.

Anschliessend wird die Beschickungsöffnung geschlossen und gleichzeitig eine zweite Position, die Nullposition, zwischen dem Lastträger und der Transfereinrichtung durch eine relative Bewegung derselben zueinander eingestellt. In dieser Position wird ein Nullabgleich der Waage durchgeführt oder ein Nullwert in die Waage eingelesen. Vor und/oder nach dem Nullabgleich kann eine Überprüfung der Funktionsfähigkeit der Waage und der Wägeparameter durchgeführt werden. Diese Überprüfung kann beispielsweise eine Kalibrierung der Waage mit einem internen Kalibriergewicht, das Tarieren, das Justieren, eine Überprüfung des Luftdrucks oder anderer Parameter im Wägeraum und/oder das Einstellen verschiedener Parameter durch den Benutzer umfassen.

Nach Abschluss dieser Überprüfung kann das Wägegut durch ein weiteres aufeinander zu bewegen des Lastträgers relativ zur Transfereinrichtung von der Transfereinrichtung auf den Lastträger transferiert werden, wobei die Aufnahmen berührungslos durch einander hindurch greifen, und anschliessend das Wägegut gewogen wird. Lastträger und Transfereinrichtung befinden sich in einer dritter Position, der Wägeposition.

Nach Abschluss der Messung, wird das Wägegut durch eine umgekehrte Bewegungsabfolge des Lastträgers in Relation zur Transfereinrichtung wieder auf die Transfereinrichtung transferiert.

Das Überprüfen der Wägeparameter, das Auflegen des Wägeguts auf den Lastträger, das Wiegen, sowie das Abheben des Wägeguts kann so lange wiederholt werden, bis eine vorgegebene Anzahl von Wägungen durchgeführt wurde. Anschliessend wird die Beschickungsöffnung wieder geöffnet und die erste Position zwischen Lastträger und Transfereinrichtung durch eine relative Bewegung derselben zueinander eingestellt, so dass das Wägegut von der Transfereinrichtung entfernt werden kann. Das Auflegen eines Wägeguts auf die Transfereinrichtung und/oder das Entfernen eines Wägeguts von der Transfereinrichtung kann sowohl manuell als auch automatisiert geschehen, beispielsweise mittels eines geeigneten Roboters oder einer anderen bekannten Vorrichtung.

Das Öffnen und Schliessen der Beschickungsöffnung durch das Verschlusselement wird direkt und/oder indirekt durch den Antrieb bewirkt, welcher zusammenwirkend mit dem Stellglied und dem Übertragungselement auch das Einstellen der mindestens ersten, zweiten und dritten Position zwischen dem Lastträger und der Transfereinrichtung bewirkt. Je nach Ausgestaltung des Verschlusselements und des Stellglieds können auch unterschiedliche Antriebe für das Stellglied und das Verschlusselement verwendet werden, welche koordiniert angesteuert werden.

Unterschiedliche Ausgestaltungen einer elektronischen Waage mit einem Windschutz werden anhand der Figuren näher erläutert, wobei gleiche Elemente mit identischen Bezugszeichen versehen sind.
- Fig. 1: Teilansicht einer elektronischen Waage mit einem ersten Windschutz im Schnitt, welcher eine geöffnete Beschickungsöffnung sowie eine Transfereinrichtung und einen Lastträger, welche eine erste Position zueinander einnehmen, aufweist;
- Fig. 2: Teilansicht einer elektronischen Waage mit einem ersten Windschutz im Schnitt, welcher eine geschlossene Beschickungsöffnung sowie eine Transfereinrichtung und einen Lastträger, welche eine zweite Position zueinander einnehmen, aufweist;
- Fig. 3: Teilansicht einer elektronischen Waage mit einem ersten Windschutz im Schnitt, welcher eine geschlossene Beschickungsöffnung sowie eine Transfereinrichtung und einen Lastträger, welche eine dritte Position zueinander einnehmen, aufweist;
- Fig. 4: stark schematisierte Seitenansicht der Aufnahmen des Lastaufnehmers und der Transfereinrichtung, welche eine erste, zweite und dritte Position zueinander einnehmen;
- Fig. 5: Teilansicht einer elektronischen Waage mit einem zweiten Windschutz im Schnitt, welcher eine geöffnete Beschickungsöffnung sowie eine Transfereinrichtung und einen Lastträger, welche eine erste Position zueinander einnehmen, aufweist;
- Fig. 6: Teilansicht einer elektronischen Waage mit einer Transfereinrichtung, einem Lastträger und einem Antrieb mit einem Kurvenrad und einem Stellglied mit einer Führungsnut in einer schematischen Explosionsdarstellung;
- Fig. 7: schematische Darstellung einer Transfereinrichtung, eines Lastträgers, eines als Schieber ausgestalteten Stellglieds mit Führungsnut und eines Übertragungselements;
- Fig. 8: Teilansicht einer elektronischen Waage im Schnitt, welche einen durch ein verschiebbares Verschlusselement verschliessbaren Wägeraum aufweist;
- Fig. 9: Aufsicht auf einen im Wesentlichen runden Wägeraum, welcher mit einem drehbar gelagerten Verschlusselement verschliessbar ist, und in welchem mit Auflageelementen versehene Aufnahmen angeordnet sind;
- Fig. 10: vereinfachte dreidimensionale Ansicht der Aufnahmen aus Figur 9.

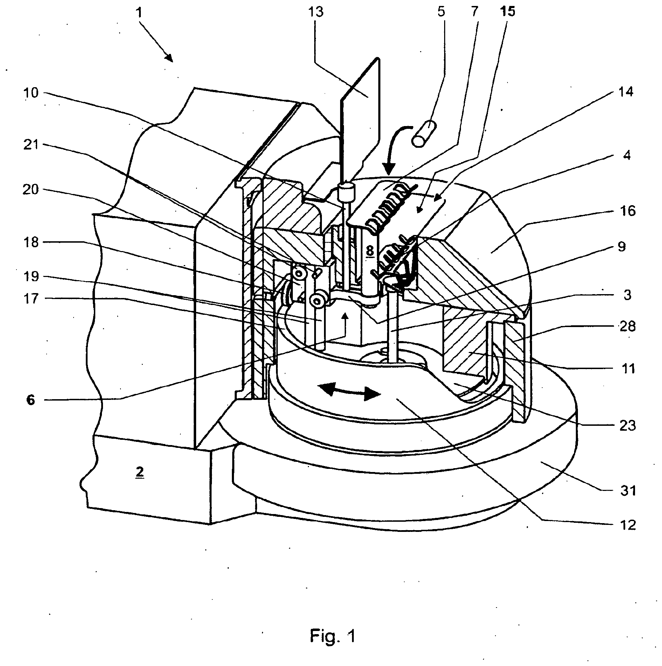

Figur 1 zeigt eine Teilansicht einer elektronischen Waage 1 im Schnitt. Die Waage 1 weist ein Gehäuse 2 auf, in dem unter anderem die Wägemechanik angeordnet ist, welche mit einem Lastträger 3 verbunden ist. Der Lastträger 3 weist an seinem freien Ende eine erste Aufnahme 4 für das Wägegut 5 auf. Das Gehäuse 2 der Waage 1 weist ein hervorstehendes Bodenelement 31 auf, auf dem ein Stellglied 12 in Form eines Zylinders mit kreisförmigen Querschnitt und einer Grundplatte mit einer mittig angeordneten Durchführung für den Lastträger 3 sowie einer als Kurvenscheibe ausgestalteten Abschlusskante 17 angeordnet ist. Das Stellglied 12 stellt einen Teil eines Antriebs dar, welcher ferner ein im Bodenelement 31 angeordnetes Getriebe und einen im Gehäuse 2 angeordneten Motor aufweist. Das Stellglied ist drehbar auf dem Bodenelement 31 angeordnet.

Zum Schutz vor Verschmutzung, ist das Stellglied 12 mit einem Wandelement 28 ummantelt, welches zwischen dem Bodenelement 31 und einem Windschutz 16 befestigt ist.

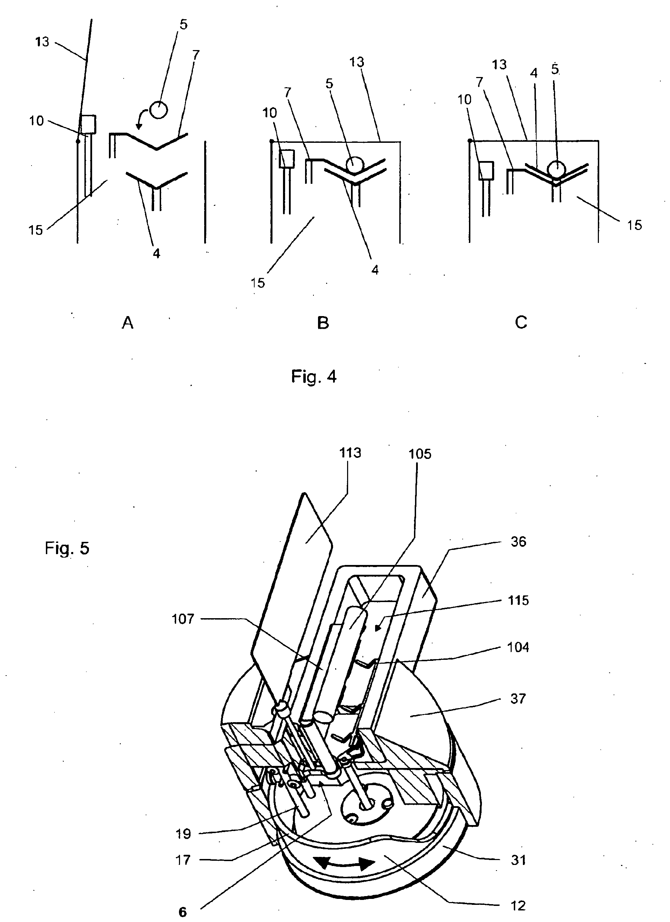

Im Inneren des zylinderförmigen Stellglieds 12 ist eine Trägerstruktur (s. Abb. 5) angeordnet. Diese Trägerstruktur weist eine Bodenplatte 23 mit einer Durchführung für den Lastträger 3 auf. An der Bodenplatte 23 sind zwei beabstandete Führungsstangen 19 befestigt, deren freie Enden in der Regel über die Kante 17 des Stellglieds 12 hinausragen. Die Führungsstangen 19 dienen als Vertikalführung für eine Transfereinrichtung 6.

Auf der Bodenplatte 23 ist ein weiteres Wandelement 11 angeordnet, welches als zusätzlicher Träger für den Windschutz 16 dient. Das Wandelement 11 hat eine im Wesentlichen zylindrische Form mit einer dem Gehäuse 2 zugewandten Aussparung, in welcher die Führungsstangen 19 angeordnet sind und an welcher das Stellglied 12 vorbeibewegt wird.

Die Transfereinrichtung 6 besteht aus einem zwischen den Führungsstangen 19 angeordneten Führungsblock 20, einem mit dem Führungsblock 20 verbundenen horizontalen Träger 9 und einem mit dem horizontalen Träger 9 verbundenen vertikalen Träger 8. Das freie Ende des vertikalen Trägers 8 trägt eine zweite Aufnahme 7 für das Wägegut 5.

An zwei gegenüberliegenden Seiten des Führungsblocks 20 sind Gleitmittel 21 in Form von je einer Rolle und einem Stift angebracht, zwischen denen die Führungsstangen 19 verlaufen. Die Gleitmittel 21 ermöglichen eine weitestgehend reibungslose vertikale Verschiebung der Transfereinrichtung entlang der Führungstangen 19.

Weiterhin ist am Führungsblock 20 ein Übertragungsmittel 18 befestigt. Das Übertragungsmittel 18 ist in diesem Ausführungsbeispiel eine Rolle, welche auf der Kante 17 des Stellglieds 12 entlang läuft, wenn sich dieses an der Transfereinrichtung 6 vorbei bewegt.

Über den Wandelementen 11, 28 erstreckt sich der Windschutz 16, welcher einen Wägeraum 15 umschliesst. Der Boden des Wägeraums 15 weist mindestens eine Durchführung für den Lastträger 3 sowie den vertikalen Träger 8 der Transfereinrichtung 6 auf. Der Wägeraum 15 weist ferner eine Beschickungsöffnung 14 auf, welche durch ein bewegliches Verschlusselement 13 in Form einer Klappe verschliessbar ist. Das Verschlusselement 13 ist um eine dem Gehäuse 2 zugewandte Achse schwenkbar oder klappbar.

In Figur 1 ist eine erste Position, die Beschickungsposition, zwischen Lastträger 3 und Transfereinrichtung 6 dargestellt, in welcher deren Aufnahmen 4, 7 einen maximalen vertikalen Abstand zueinander haben und das Stellglied 12 so ausgerichtet ist, dass sich das Übertragungselement 18 auf der Kante 17 in einem Teil des Stellglieds 12 mit der grössten vertikalen Ausdehnung befindet.

In dieser Position kann das Wägegut 5 bei geöffnetem Wägeraum 15 auf die Aufnahme 7 der Transfereinrichtung 6 aufgelegt und/oder abgenommen werden, ohne dass eine zusätzliche Kraft auf den Lastträger 3 ausgeübt wird. Das Verschlusselement 13 wird durch eine auf dem horizontalen Träger 9 befestigte Stange 10 geöffnet und offen gehalten. Der Antrieb bewirkt sowohl eine Hubbewegung der Transfereinrichtung 6 als auch eine Hubbewegung der Stange 10, so dass diese bei einer Bewegung entgegen der Lastrichtung von unten gegen das Verschlusselement 13 gedrückt wird und das Verschlusselement 13, genauer die Beschickungsöffnung, öffnet. Lässt die gegen die Lastrichtung ausgeübte Kraft auf das Verschlusselement 13 nach, wird die Beschickungsöffnung wieder verschlossen.

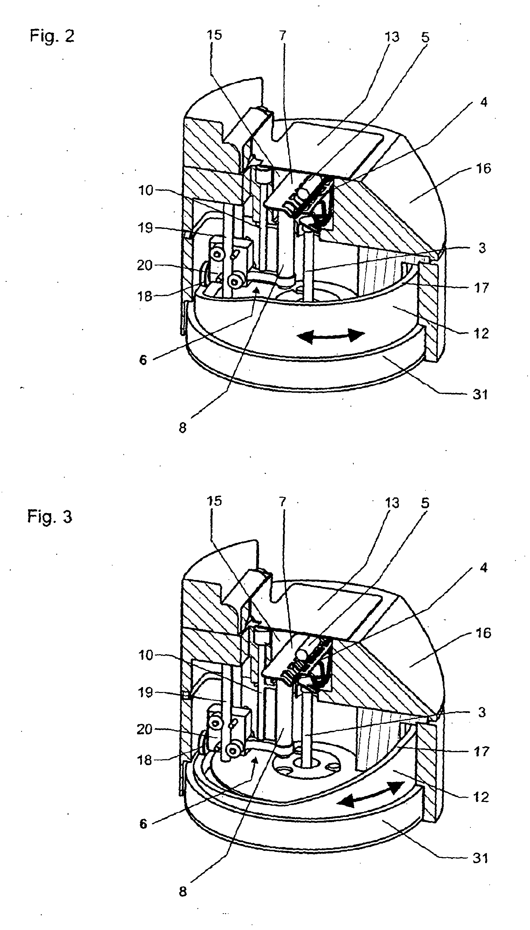

Figur 2 zeigt in Form einer Teildarstellung der Figur 1 eine zweite Position, die Nullposition, zwischen den Aufnahmen 4, 7 des Lastträgers 3 und der Transfereinrichtung 6. Der Wägeraum 15 ist durch das Verschlusselement 13 verschlossen.

Ein Wechsel von der ersten in die zweite Position wird durch eine Drehbewegung des Stellglieds 12 an der Transfereinrichtung 6 vorbei bewirkt. Das Stellglieds 12 wird an der Transfereinrichtung 6 und den Führungsstangen 19 vorbei gedreht, dabei folgt, das Übertragungselement 18 dem Kurvenverlauf der Kante 17 und die Transfereinrichtung 6 wird in Lastrichtung abgesenkt und nähert sich dem Lastträger 3. Das Stellglied ist so gestaltet, dass eine flüssige und im Wesentlichen ruckfreie Bewegung des Übertragungselements 18 und damit eine flüssige und im Wesentlichen ruckfreie Hubbewegung der Transfereinrichtung 6 ausgelöst wird. Gleichzeitig wird bei einem Wechsel von der ersten zur zweiten Position der Wägeraum 15 durch das Verschlusselement 13 verschlossen, da die Hubbewegung der Transfereinrichtung 6 gleichzeitig eine Hubbewegung der Stange 10 bedingt. Wird die Transfereinrichtung 6 und damit die Stange 10 in Lastrichtung abgesenkt, so wird der Kontakt zwischen Verschlusselement 13 und Stange 10 gelöst und der Wägeraum 15 durch das Verschlusselement 13 verschlossen.

Die in der Figur 2 gezeigte zweite Position zeigt die in Lastrichtung abgesenkte Transfereinrichtung 6. Im Wägeraum 15 sind sowohl die beiden Aufnahmen 4, 7 als auch das Wägegut 5 angeordnet. Das Wägegut 5 ruht vollständig auf der Aufnahme 7 der Transfereinrichtung 6. In dieser Position wird ein Nullabgleich durchgeführt und zusätzlich kann eine Überprüfung der Funktionsfähigkeit der Waage und/oder verschiedener Wägeparameter durchgeführt werden.

In Figur 3 ist als dritte Position, die Wägeposition dargestellt. Der Wägeraum 15 ist immer noch verschlossen. Das Stellglied 12 wurde weiterbewegt, so dass das Übertragungselement 18 und damit die Transfereinrichtung 6 nun maximal in Relation zum Lastträger abgesenkt wurden. Die Aufnahme 7 der Transfereinrichtung 6 hat sich berührungsfrei nach unten durch die Aufnahme 4 des Lastträgers 3 hindurch bewegt und so das Wägegut 5 an die Aufnahme 4 des Lastträger 3 übergeben, so dass das Gewicht des Wägeguts 5 ermittelt werden kann.

Die drei in den Figuren 1 bis 3 gezeigten Positionen zeichnen sich durch den Abstand der Aufnahme 4 zur Aufnahme 7 sowie dadurch aus, dass der Wägeraum 15 geöffnet oder geschlossen ist. Sowohl das Öffnen und/oder Schliessen des Wägeraums, als auch der Abstand der Aufnahmen 4, 7 zueinander wird durch die Drehbewegung des Stellglieds 12 bedingt. Das Stellglied 12 hat im Wesentlichen die Form eines schräg abgeschnittenen Zylinders mit geschwungenen Übergängen, auf dessen Kante 17 das Übertragungselement 18 geführt wird und die durch den Antrieb verursachte Drehbewegung des Stellglieds 12 in eine lineare Hubbewegung der Transfereinrichtung 6 sowie der Strange 10 umwandelt.

Der Wägeraum 15 ist ebenso wie die Aufnahmen 4, 7 an die Dimension des Wägeguts 5 angepasst, damit die Anpassung der Waage und insbesondere des Wägeraums 15 an die Umgebung möglichst rasch erfolgen kann.

Die verschiedenen in den Figuren 1 bis 3 bereits beschriebenen Positionen, in denen die mit dem Lastaufnehmer verbundene Aufnahme 4 und die mit der Transfereinrichtung verbundene Aufnahme 7 durch eine relative Bewegung der Transfereinrichtung zum Lastträger positioniert werden können, sind stark schematisiert in Figur 4 gezeigt.

Figur 4A zeigt die erste Position, in der die beiden Aufnahmen 4, 7 einen maximalen Abstand zu einander aufweisen und das Verschlusselement 13 geöffnet ist, so dass ein Wägegut 5 auf der Aufnahme 7 platziert werden kann.

Figur 4B zeigt die zweite Position, in welcher der vertikale Abstand zwischen den Aufnahmen 4, 7 durch eine relative Bewegung des Lastträgers zur Transfereinrichtung verringert wurde und gleichzeitig der Wägeraum 15 durch das Verschlusselement 13 verschlossen wurde. In dieser Position kann unter anderem der Nullabgleich der Waage im entlasteten Zustand durchgeführt werden.

Figur 4C zeigt als dritte Position die Wägeposition, in welcher die beiden Aufnahmen 4, 7 sich durcheinander hindurch bewegt haben und durch diese Bewegung das Wägegut 5 von der Aufnahme 7 auf die Aufnahme 4 transferiert wurde. Ein Wechsel zwischen der zweiten und dritten Position erfolgt bei geschlossenem Wägeraum 15.

Prinzipiell wäre es auch möglich entweder nur den Lastträger oder nur die Transfereinrichtung oder sowohl den Lastträger als auch die Transfereinrichtung zu bewegen, wobei eine geführte Hubbewegung der Transfereinrichtung bevorzugt wird.

Die in den Figuren 1 bis 3 gezeigte Waage weist einen Windschutz 16 auf, welcher für kleine Wägegüter ausgelegt ist. In Figur 5 ist ein weiterer Windschutz mit einem vergrösserten Wägeraum 115 gezeigt. Der hier gezeigte Windschutz weist eine Haltestruktur 37 auf, in welche ein Wägeraumelement 36 eingesetzt ist, welches den Wägeraum 115 definiert und mit einem Verschlusselement 113 verschlossen werden kann. Weiterhin weist die Waage an die Grösse des Wägeguts angepasste Aufnahmen 104, 107 auf.

Sollen grössere Güter 105 verwogen werden, so bietet es sich an, den in Figur 5 gezeigten zweitteiligen Windschutz mit austauschbarem Wägeraumelement 36 und einer Haltestruktur 37 zu verwenden. Das Wägeraumelement 36 ist im Wesentlichen kastenförmig und kann durch ein bewegliches Verschlusselement 113 verschlossen werden. Ebenso können die Aufnahmen 104, 107 an die Grösse des zu wägenden Guts 105 angepasst werden. Diese Ausführungsform ist besonders geeignet für die Wägung unterschiedlich langer Güter, da in Abhängigkeit des zu bestimmenden Wägeguts das Wägeraumelement 36 sowie die Aufnahmen 104, 107 einfach gegen in der Länge angepasste Elemente ausgetauscht werden können. Für die Wägung breiter oder anders geformter Güter kann gegebenenfalls der gesamte Windschutz, insbesondere die Haltestruktur 37, das Wägeraumelement 36 sowie das Verschlusselement 113 ausgetauscht werden.

Neben den in den Figuren gezeigten, im Wesentlichen rechteckigen Wägeräumen, ist es selbstverständlich möglich den Wägeraum sowie die Aufnahmen an beliebige Wägegüter anzupassen. Der Wägeraum kann beispielsweise im Wesentlichen dreieckig, viereckig, vieleckig, rund und/oder oval ausgestaltet werden und es können unterschiedliche Aufnahmen verwendet werden, wobei eine Vielzahl verschiedener Auflagen bereits bekannt sind.

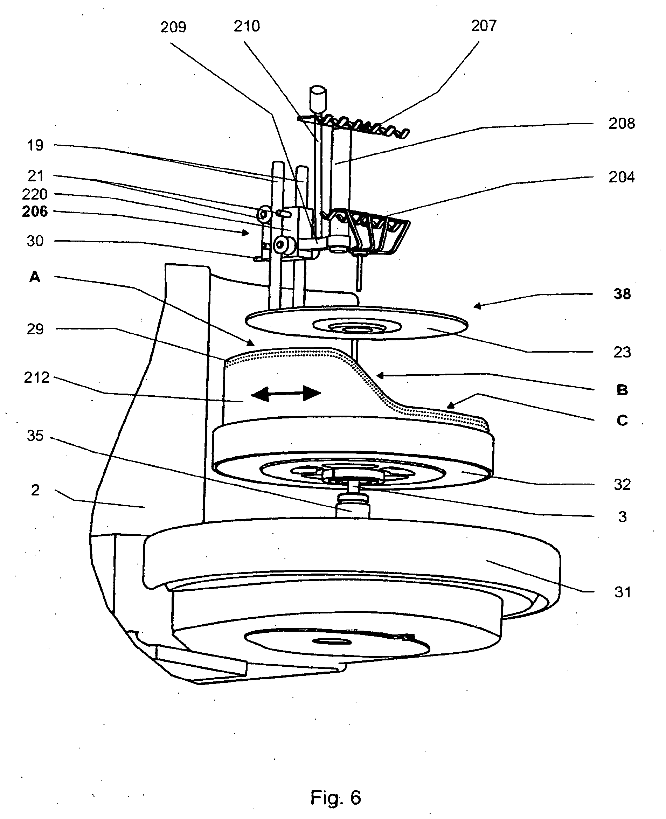

Figur 6 zeigt als Explosionszeichnung eine Teildarstellung einer weiteren Ausführungsvariante mit einem alternativen Übertragungselement 30 und einem alternativen Stellglied 212. Die gezeigte Ausführungsform kann mit den in den Figuren 1 bis 5 gezeigten Varianten kombiniert werden. Die Trägerstruktur 38, das Gehäuse 2 sowie das Bodenelement 31 entsprechen im Wesentlichen der in Figur 1 gezeigten Ausführungsform.

Aus dem Bodenelement 31 ragt der Lastträger 3 heraus, welcher im zusammengebauten Zustand im Wesentlichen durch eine Bodenplatte 32 des Stellglieds 212 sowie die Bodenplatte 23 der Trägerstruktur 38 hindurchragt und mit der Aufnahme 204 verbunden wird. Aus diesem Grund weisen beide Bodenplatten 32, 23 mittig angeordnete Durchführungen auf. Die Trägerstruktur 38 ist mit einer Führungshülse 35 für den Lastträger 3 derart befestigt, dass das Stellglied unabhängig von der Trägerstruktur und dem Bodenelement 31 bewegbar ist.

Die Bodenplatte 32 des Stellglieds 212 ist drehbar gelagert und wirkt mit dem Antrieb zusammen. Als Antrieb eignet sich beispielsweise ein im Gehäuse der Waage angeordneter Motor, welcher über ein oder mehrere Stellräder oder Zahnräder an das Stellglied 212 angekoppelt wird. Die Stellräder befinden sich beispielsweise im Bodenelement 31 und sind mit dem Antriebsmotor verbunden, welcher sich im Gehäuse 2 befindet. Dieser Antrieb, vor allem dessen Antriebsmechanik ähnelt im Wesentlichen den bekannten Antrieben, welche für Mikrowaagen mit rundem Windschutz eingesetzt werden.

Auf der Bodenplatte 23 sind beabstandet zueinander zwei Führungsstangen 19 befestigt. Zwischen den Führungsstangen 19 ist ein vertikal verschiebbarer Führungsblock 220 angeordnet, welcher einen Teil der Transfereinrichtung 206 darstellt. Der Führungsblock 220 weist an seinen den beiden Stangen 19 zugewandten Seiten Gleitmittel 21 in Form von zusammenwirkenden Rollen und Stifte auf, welche die vertikale Bewegung des Führungsblocks 220 und der Transfereinheit 206 führen. Weiterhin ist am Führungsblock 220 ein nach aussen weisendes Übertragungselement 30, welches mit einer Nut 29 am Stellglied 212 wechselwirken kann, und ein nach innen weisender horizontaler Träger 209 angeordnet, an dem ein vertikaler Träger 208 für die Aufnahme 207 sowie eine Stange 210 zur Aktivierung des Verschlusselements 213 befestigt sind.

Auf der Bodenplatte 32 ist das Stellglied 212 befestigt, welches ein im Wesentlichen rotationssymmetrischer Zylinderabschnitt mit einer wellenförmig ausgestalteten freien Kante ist. In dieser Ansicht sind die drei unterschiedlichen Abschnitte A, B, C des Stellglieds 212 gut zu erkennen, welche sich vor allem durch ihre vertikale Ausdehnung in Lastrichtung unterscheiden.

Bei diesem Ausführungsbeispiel weist das Stellglied 212 eine parallel zur freien Kante verlaufende Nut 29 auf, in die das stiftförmige Übertragungselement 30 eingreifen kann, so dass die Transfereinrichtung 206 eine lineare Hubbewegung erfährt, wenn sich das Stellglied 212 an ihr vorbei bewegt. Befindet sich das Führungselement 30 im Abschnitt A, so befinden sich die Aufnahme 207 der Transfereinrichtung 206 und die Aufnahme 204 des Lastträgers 3 in der ersten Position und weisen einen grösstmöglichen Abstand zueinander auf. In dieser Position ist die Beschickungsöffnung geöffnet und es kann ein zu wägendes Gut auf der Transferanordnung angeordnet werden.

Wird das Stellglied 212 gedreht, so bewegt sich das Führungselement 30 von Abschnitt A zu Abschnitt B und es wird eine mit Bezug auf die Zeichnung nach unten gerichtete Hubbewegung der Transfereinrichtung 206 eingeleitet. Die Aufnahme 207 der Transfereinrichtung 206 nähert sich der Aufnahme 204 des Lastträgers 3, verbleibt aber oberhalb derselben. Gleichzeitig wird die Beschickungsöffnung durch das Verschlusselement verschlossen (s. a. Figur 4b). Eine weitere Bewegung des Stellglieds 212 führt die nach unten gerichtete Hubbewegung weiter, so dass die beiden Aufnahmen 204, 207 ineinander greifen bzw. durch einander hindurch bewegt werden können, bis die dritte Position erreicht ist, in welcher die Aufnahme 207 unterhalb der Aufnahme 204 angeordnet ist. Bei der Bewegung von der zweiten in die dritte Position kann ein auf der Transfereinrichtung befindliches Wägegut auf die Aufnahme des Lastträgers transferiert werden (s. a. Fig.4c) Durch eine Weiterbewegung des Stellglieds 212 in dieselbe Richtung oder in die entgegen gesetzte Richtung können die Positionen gewechselt werden und das Stellglied aus der dritten über die zweite Position wieder zurück in die erste geführt werden.

Die Aufnahme 207 sowie auch die Aufnahme 204 weisen mehrere zueinander beabstandet angeordnete Haken auf, auf welchen das Wägegut platziert werden kann. Die Aufnahmen 204, 207 sind so ausgestaltet, dass die Haken beider Aufnahmen 204, 207 "auf Lücke" angeordnet sind, damit dieselben bei einer vertikalen Bewegung der Transfereinrichtung 206 in Relation zum Lastträger 3 durcheinander hindurch greifen und das Wägegut von einer Aufnahme in die andere transferiert werden kann.

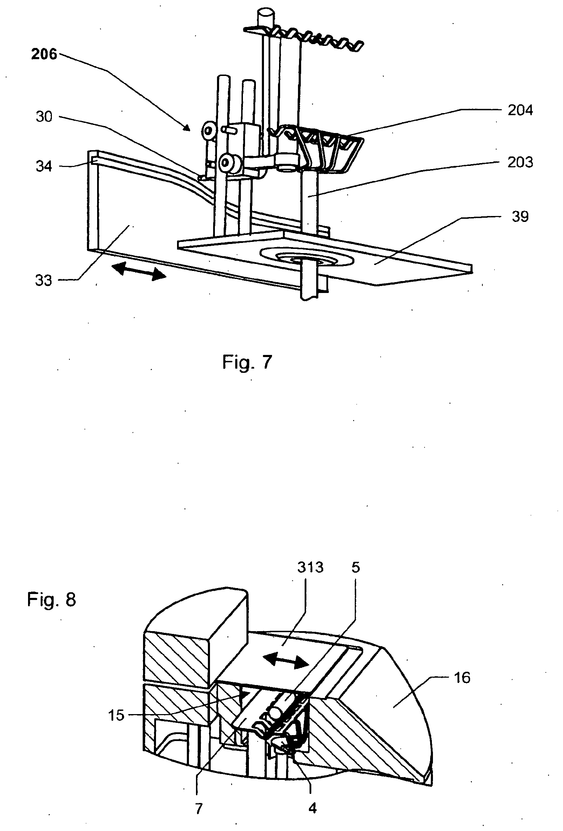

Figur 7 zeigt nochmals die Transfereinrichtung 206 aus Figur 6, sowie deren Anordnung in Relation zu einer hier eckigen Trägerstruktur 39, zusammen mit einem alternativen Stellglied 33 in Form eines Schiebers mit einer Führungsnut 34, in der das Übertragungselement 30 der Transfereinrichtung 206 geführt werden kann. In der in Figur 7 gezeigten Anordnung wird eine Hubbewegung der Transfereinrichtung 206 durch eine horizontale Verschiebung des Schiebers 33 eingeleitet. Diese Anordnung eignet sich vor allem für die Umrüstung von Waagen mit einem eckigen Wägeraum.

Als weitere Ausgestaltungen des Stellglieds können beispielsweise auch Exzenter oder eine parallel zur Lastrichtung angeordnete Kurvenscheibe eingesetzt werden.

Figur 8 zeigt in einer Teildarstellung einer elektronischen Waage im Schnitt, welche im Wesentlichen der in den Figuren 1 bis 3 gezeigten Waage entspricht, allerdings mit einem alternativen Verschlusselement 313 für den Wägeraum 15. Das Verschlusselement 313 ist gleitverschieblich gelagert und kann über die Beschickungsöffnung 14 des Wägeraums 15 geschoben werden. Bevorzugt wird die hier gezeigte Variante, bei der das Verschlusselement 313 beim Öffnen in den Windschutz geschoben wird, wobei selbstverständlich auch andere Öffnungsrichtungen realisierbar sind. Die Gleitbewegung des Verschlusselements 313 wird ebenfalls durch den Antrieb, welcher auch das Stellglied aufweist, verursacht, indem die Bewegung des Antriebs durch geeignete Mittel in eine Zug- oder Schubbewegung umgesetzt wird.

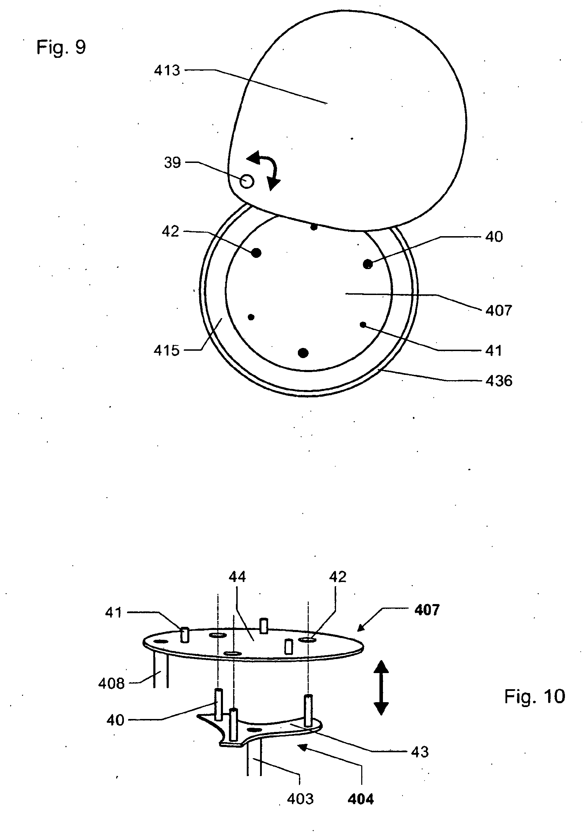

Eine weitere Ausgestaltung des Wägeraums 415, der Aufnahmen 404, 407 sowie des Verschlusselements 413 insbesondere zur Wägung scheibenförmiger Güter ist in den Figuren 9 und 10 gezeigt. Figur 9 zeigt einen von einem im Wesentlichen runden Wägeraumelement 436 umschlossenen Wägeraum 415. Der Wägeraum 415 kann mittels eines Verschlusselements 413 verschlossen und/oder geöffnet werden, welches um ein Befestigungsmittel 39 drehbar am Windschutz (hier nicht gezeigt) befestigt ist. Das Öffnen und/oder Schliessen des Verschlusselements 413 ist an die Bewegung des Stellglieds und den damit verbundenen Antrieb gekoppelt, dies kann beispielsweise über eine drehbare Antriebsstange geschehen, welche am Drehpunkt des Verschlusselements 413 angebracht ist und über ein geeignetes Stellelement mit dem Antrieb verbunden ist. Das Stellelement kann beispielsweise ein Zahnrad sein, welches in eine geeignete Führung am Stellglied eingreift.

Im Inneren des Wägeraums 415 sind die Aufnahme 407 der Transfereinrichtung und die Aufnahme 404 des Lastträgers 403 angeordnet. Die Aufnahme 407 weist mindestens drei erhabene Auflageelemente 41 auf, sowie mindestens drei Durchführungen 42, durch welche die Auflageelemente 40 der Aufnahme 404 geführt werden können, wenn die Aufnahmen 404, 407 relativ zueinander bewegt werden.

Die Aufnahmen 404, 407 sind in Figur 10 schematisch dreidimensional dargestellt. Am Lastträger 403 ist die Aufnahme 404 befestigt und die Aufnahme 407 ist über einen vertikalen Träger 408 mit einer Transfereinrichtung verbunden. Die Aufnahme 404 weist eine propellerartig geformte Grundplatte 43 auf, an der mindestens drei Auflageelemente 40 befestigt sind. Die Aufnahme 407 kann analog zur Aufnahme 404 ausgestaltet werden und versetzt dazu angeordnet sein oder wie hier gezeigt als Platte 44 mit Durchführungen 42 für die Auflageelemente 40 und gegebenenfalls mindestens drei weiteren Auflageelementen 41 ausgestaltet sein. Es ist selbstverständlich auch möglich, dass beide Aufnahmen 404, 407 plattenförmig ausgestaltet sind. Die Auflageelemente 41 sind kürzer als die Auflageelemente 40, so dass beim durch einander hindurchgreifen der beiden Auflagen 404, 407 ein Auflegen oder Abheben eines Wägeguts von der mit dem Lastaufnehmer 403 verbundenen Aufnahme 404 möglich ist. Das Wägegut wird durch die Auflageelemente 40, 41 im Wesentlichen punktförmig abgestützt.

Besonders vorteilhaft ist es, wenn eine elektronische Waage alternativ mit einem herkömmlichen Windschutz oder mit einem erfindungsgemässen Windschutz versehen werden kann. Ein solcher Austausch bietet sich insbesondere an, wenn der herkömmliche Windschutz wie auch der erfindungsgemässe Windschutz gleiche Dimensionen haben und mit einem gleichartigen Antrieb betrieben werden können.

Es ist weiterhin vorteilhaft, nicht nur den Wägeraum durch Verwendung eines geeigneten Windschutzes an ein zu bestimmendes Wägegut anzupassen, sondern zusätzlich auch die Dimension und Form der Aufnahmen der Transfereinrichtung und des Lastträgers an ein zu bestimmendes Wägegut anzupassen. Ebenso ist es denkbar den Wägeraum mit weiteren Beschickungsöffnungen zu versehen oder diese an einer anderen Stelle, beispielsweise seitlich, anzuordnen.

### Bezugszeichenliste

- 1: Waage
- 2: Gehäuse
- 3, 203, 403: Lastträger
- 4, 104, 404: erste Aufnahme
- 5, 105: Wägegut
- 6, 206: Transfereinrichtung
- 7, 207, 407: zweite Aufnahme
- 8, 208, 408: vertikaler Träger
- 9, 209: horizontaler Träger
- 10, 210: Stange
- 11: Wandelement
- 12, 212: Stellglied
- 13, 113, 313, 413: Verschlusselement
- 14: Beschickungsöffnung
- 15, 115, 415: Wägeraum
- 16: Windschutz
- 17, 117: Kante
- 18: Rolle
- 19: Führungsstange
- 20, 220: Führungsblock
- 21: Gleitmittel
- 23: Bodenplatte
- 24: Durchführung
- 25: Abdeckung
- 28: Wandelement
- 29: Nut
- 30: Übertragungselement
- 31: Bodenelement
- 32: Bodenplatte
- 33: Stellglied
- 34: Nut
- 35: Führungshülse
- 36, 436: Wägeraumelement
- 37: Haltestruktur
- 38: Trägerstruktur
- 39: Befestigungsmittel
- 40: Auflageelement
- 41: Auflageelement
- 42: Durchführung
- 43: Grundplatte von 404

## Patentansprüche

1. Verfahren zur Beschickung einer elektronischen Waage mit einem Windschutz (16), der einen an ein zu wägendes Wägegut angepassten Wägeraum (15, 115) umschliesst und mindestens eine mit einem Verschlusselement (13, 213) verschliessbare Beschickungsöffnung (14) aufweist, mit einem Antrieb, welcher das Verschlusselement (13, 213) betätigt und ferner ein Stellglied (12, 33, 212) aufweist, und mit einer Transfereinrichtung (6, 206), welche sowohl mit einem Lastträger (3, 203) als auch über ein Übertragungselement (18 ,30) mit dem Stellglied (12, 33, 212) zusammenwirkt, wobei das Verfahren die folgenden Schritte umfasst:
a. Öffnen der Beschickungsöffnung (14) durch Betätigung des Verschlusselements (13, 213) und gleichzeitiges Einstellen einer ersten Position zwischen dem Lastträger (3, 203) und der Transfereinrichtung (6, 206) durch eine relative Bewegung derselben zueinander, welche mittels des Antriebs ausgelöst wird;
b. Anordnen eines Wägeguts (5, 105) auf der Transfereinrichtung (6, 206);
c. Schliessen der Beschickungsöffnung (14) und gleichzeitiges Einstellen einer zweiten Position zwischen dem Lastträger (3, 203) und der Transfereinrichtung (6, 206) durch eine relative Bewegung derselben zueinander;
d. Durchführen eines Nullabgleichs der Waage;
e. Transferieren des Wägeguts (5, 105) von der Aufnahme (7, 207) der der Transfereinrichtung (6, 206) auf die Aufnahme (4, 104) des Lastträgers (3, 203), indem der Lastträger (3, 203) und die Transfereinrichtung (6, 206) relativ zueinander in eine dritten Position bewegt werden;
f. Wiegen des Wägeguts (5,105);
g. Transferieren des Wägeguts (5,105) vom Lastträger (3, 203) auf die Transfereinrichtung (6, 206), indem die Transfereinrichtung (6, 206) und der Lastträger (3, 203) relativ zueinander in die zweite Position bewegt werden;
h. Öffnen der Beschickungsöffnung (14) und gleichzeitiges Einstellen einer ersten Position zwischen der Lastträger (3, 203) und der Transfereinrichtung (6, 206) durch eine relative Bewegung derselben zueinander;
i. Entfernen des Wägeguts (5, 105) von der Transfereinrichtung (6, 206);
wobei die Betätigung des Verschlusselements (13, 213) und das Einstellen der mindestens ersten, zweiten und dritten Position zwischen dem Lastträger (3, 203) und der Transfereinrichtung (6, 206) durch ein Zusammenwirken des Antriebs, des Stellglieds (12, 33, 212) sowie des Übertragungselements (18 ,30) erfolgt.

2. Verfahren nach Anspruch 1, **dadurch gekennzeichnet, dass** die Schritte d bis g bis zur Erreichung einer vorgegebenen Anzahl von Wiederholungs-Wägungen wiederholt werden.

3. Verfahren nach einem der Ansprüche 1 oder 2, **dadurch gekennzeichnet, dass** vor und/oder nach dem Nullabgleich der Waage die Funktionsfähigkeit der Waage überprüft und/oder die Wägeparameter überprüft und/oder eingestellt werden.

4. Verfahren nach einem der Ansprüche 1 bis 3, **dadurch gekennzeichnet, dass** das Anordnen und/oder Entfernen des Wägeguts (5, 105) von der Transfereinrichtung (6, 206) automatisiert erfolgt.

## Claims

1. Method of loading an electronic balance, with a draft shield (16) that encloses a weighing compartment (15, 115) adapted to a specific weighing object and comprises at least one loading-access opening (14) that can be closed with a closure element (13, 213), further with a drive mechanism which actuates the closure element (13, 213) and which comprises a position-setting member (12, 33, 212), and further with a transfer device (6, 206) which cooperates with a load carrier (3, 203) and also cooperates through a displacement-transmitting element (18, 30) with the position-setting member (12, 33, 212), wherein the method comprises the following steps:
a. opening the loading-access opening (14) by actuating the closure element (13, 213) and simultaneously setting a first position between the load carrier (3, 203) and the transfer device (6, 206) by moving them relative to each other by means of the drive mechanism;
b. arranging a weighing object (5, 105) on the transfer device (6, 206);
c. closing the loading-access opening (14) and simultaneously setting a second position between the load carrier (3, 203) and the transfer device (6, 206) by moving them relative to each other;
d. performing a zero point adjustment of the balance;
e. transferring the weighing object (5, 105) from the load-receiving device (7, 207) of the transfer device (6, 206) to the load-receiving device (4, 104) of the load carrier (3, 203) by moving the load carrier (3, 203) and the transfer device (6, 206) into a third position relative to each other;
f. weighing the weighing object (5, 105);
g. transferring the weighing object (5, 105) from the load carrier (3, 203) to the transfer device (6, 206) by moving the transfer device (6, 206) and the load carrier (3, 203) relative to each other into the second position;
h. opening the loading-access opening (14) and simultaneously setting a first position between the load carrier (3, 203) and the transfer device (6, 206) by moving them relative to each other;
i. removing the weighing object (5, 105) from the transfer device (6, 206);
wherein the actuation of the closure element (13, 213) and the setting of at least the first, second and third position between the load carrier (3, 203) and the transfer device (6, 206) occurs by way of a cooperation of the drive mechanism, the position-setting member (12, 33, 212) and the displacement-transmitting element (18, 30).

2. Method according to claim 1, **characterized in that** the steps d to g are repeated until a predetermined number of repetitive weighings has been completed.

3. Method according to one of the claims 1 or 2, **characterized in that** before and/or after the zero-setting of the balance, the capability of the balance to function correctly is verified and/or the weighing parameters are verified and/or adjusted.

4. Method according to one of the claims 1 to 3, **characterized in that** the placing of the weighing object (5, 105) on the transfer device (6, 206) and/or the removing of the weighing object (5, 105) from the transfer device (6, 206) occurs in an automated manner.

## Revendications

1. Procédé pour alimenter une balance électronique avec un paravent (16), qui entoure un espace de pesée (15, 115) adapté à un article à peser et comprenant au moins une ouverture d'alimentation (14) pouvant être fermée avec un élément de fermeture (13, 213), avec un entraînement, qui actionne l'élément de fermeture (13, 213) et comprenant également un organe de réglage (12, 33, 212), et un dispositif de transfert (6, 206), qui coopère aussi bien avec un support de charge (3, 203) que par un élément de transmission (18, 30) avec l'élément de réglage (12, 33, 212), le procédé comprenant les étapes suivantes :
a. Ouverture de l'orifice d'alimentation (14) par actionnement de l'élément de fermeture (13, 213) et réglage simultané d'une première position entre le support de charge (3, 203) et le dispositif de transfert (6, 206) par un déplacement relatif des mêmes éléments, qui est déclenché au moyen de l'entraînement ;
b. Mise en place d'un article à peser (5, 105) sur le dispositif de transfert (6, 206) ;
c. Fermeture de l'orifice d'alimentation (14) et réglage simultané d'une seconde position entre le support de charge (3, 203) et le dispositif de transfert (6, 206) par déplacement relatif des mêmes éléments ;
d. Mise en oeuvre d'un tarage sur zéro de la balance ;
e. Transfert de l'article à peser (5, 105) du logement (7, 207) du dispositif de transfert (6, 206) au logement (4, 104) du support de charge (3, 203) du fait que le support de charge (3, 203) et le dispositif de transfert (6, 206) sont déplacés l'un par rapport à l'autre dans une troisième position ;
f. Pesée de l'article à peser (5, 105) ;
g. Transfert de l'article à peser (5, 105) du support de charge (3, 203) au dispositif de transfert (6, 206) du fait que le dispositif de transfert (6, 206) et le support de charge (3, 203) sont déplacés l'un par rapport à l'autre dans la seconde position ;
h. Ouverture de l'orifice d'alimentation (14) et réglage simultané d'une première position entre le support de charge (3, 203) et le dispositif de transfert (6, 206) par un déplacement relatif des mêmes éléments ;
i. Enlèvement de l'article à peser (5, 105) du dispositif de transfert (6, 206) ;
l'actionnement de l'élément de fermeture (13, 213) et le réglage de la au moins une première, une seconde et une troisième positions entre le support de charge (3, 203) et le dispositif de transfert (6, 206) s'effectuant par une action conjuguée de l'entraînement, de l'organe de réglage (12, 33, 212) et de l'élément de transmission (18, 30).

2. Procédé selon la revendication 1, **caractérisé en ce que** les étapes d à g sont répétées jusqu'à atteindre un nombre prédéfini de pesées de répétition.

3. Procédé selon l'une quelconque des revendications 1 ou 2, **caractérisé en ce que**, avant et/ou après le tarage sur zéro de la balance, le bon fonctionnement de la balance est contrôlé et/ou les paramètres de pesée sont contrôlés et/ou réglés.

4. Procédé selon l'une quelconque des revendications 1 à 3, **caractérisé en ce que** la mise en place et/ou l'enlèvement de l'article à peser (5, 105) par le dispositif de transfert (6, 206) s'effectue(nt) de façon automatisée.
